# EUROPÄISCHE PATENTSCHRIFT

(11) **EP 3 228 170 B1**
(45) Veröffentlichungstag und Bekanntmachung des Hinweises auf die Patenterteilung: **05.08.2020**
(21) Anmeldenummer: 17401034.8
(22) Anmeldetag: 31.03.2017
(51) Int. Cl.: A01C 7/20, A01B 63/24, A01B 39/22

(54) **VORRICHTUNG ZUR BEFESTIGUNG EINES WERKZEUGS AN EINEM RAHMEN**
DEVICE FOR ATTACHING A TOOL TO A FRAME
DISPOSITIF DE FIXATION D'UN OUTIL À UN CADRE

(30) Priorität: 07.04.2016 DE 102016106353
(43) Veröffentlichungstag der Anmeldung: 11.10.2017
(73) Patentinhaber: Amazonen-Werke H. Dreyer GmbH & Co. KG, 49205 Hasbergen (DE)
(72) Erfinder: Bohlen, Eike, 28215 Bremen (DE)

(56) Entgegenhaltungen:
- DE-U1- 29 718 303
- FR-A- 1 417 762
- US-A1- 2012 061 113
- US-A1- 2017 055 438

## Beschreibung

Die Erfindung betrifft eine Vorrichtung zur Befestigung eines Werkzeugs an einem Rahmen gemäß des Oberbegriffes des Patentanspruches 1.

Eine derartige Vorrichtung ist in DE 297 18 303 U1 beschrieben. An einem Rahmen einer landwirtschaftlichen Arbeitsmaschine, welcher zur Werkzeugaufnahme vorgesehene, quer zur Fahrtrichtung angeordnete Rahmenbauteile aufweist, werden mehrere Arbeitselemente bzw. Werkzeuge angeordnet. Jedes Werkzeug weist dazu zwei als Tragestruktur dienende waagerechte Backen auf, welche starr miteinander verbunden sind und an ihrer jeweiligen Außenseite Versteifungsrippen aufweisen, welche auf der Innenseite quer verlaufende Führungsnuten bilden. Durch die Versteifungsrippen und die Führungsnuten weist die Tragestruktur Aussparungen auf, deren Querschnitt dem Querschnitt des Rahmenbauteils der landwirtschaftlichen Arbeitsmaschine oder dem Querschnitt von als Führungsschiene dienenden profilierten Kantenelementen eines zur Werkzeugaufnahme vorgesehenen Rahmenbauteils entspricht. Das Rahmenbauteil und das Werkzeug werden durch Aufschieben der Tragestruktur von außen auf die Führungsschiene miteinander verbunden. Durch die aufeinander abgestimmten Querschnittsformen ist diese Verbindung formschlüssig und spielfrei. Gleichzeitig ist durch diese Verbindung gewährleistet, dass die Werkzeuge zur Einstellung eines gewünschten Reihenabstandes parallel zur Führungsschiene manuell oder automatisiert verschiebbar sind. Wird aber beispielsweise zwecks Wartung ein Austausch beispielsweise eines der inneren Werkzeuge notwendig, müssen alle äußeren Werkzeuge ebenfalls von der Führungsschiene genommen werden, da das Lösen der Werkzeuge nur durch Herunterschieben der Tragestruktur von der Führungsschiene erfolgen kann. Zusätzlich ist bei dem üblicherweise hohen Gewicht anzubringender landwirtschaftlicher Werkzeuge, wie beispielsweise Säaggregate einer Einzelkornsämaschine die Montage an ein Rahmenbauteil, insbesondere das exakte Aufschieben der formschlüssig passenden Teile, ein aufwändiger Vorgang.

Der Erfindung liegt daher die Aufgabe zugrunde, eine Vorrichtung zu schaffen, die bei gleicher Stabilität eine flexible und komfortable Befestigung von Werkzeugen an einem Rahmenbauteil einer landwirtschaftlichen Maschine ermöglicht.

Diese Aufgabe wird erfindungsgemäß durch die Merkmale des Anspruchs 1 gelöst. Das Spannelement ist verschiebbar auf der Kontaktfläche der zweiten Aussparung befestigt. Durch das Lösen der Befestigung des Spannelements wird Raum freigegeben, der ein komfortables Einhängen der Tragestruktur des zu befestigenden Werkzeugs an einem ersten profilierten Kantenelement sowie das Anliegen der die Aussparungen verbindenden Seitenfläche an dem Rahmenbauteil ermöglicht. Das anschließende verschiebbare Befestigen des Spannelementes auf der Kontaktfläche der zweiten Aussparung führt zu einem formschlüssigen Umgreifen der gegenüberliegenden profilierten Kantenelemente des Rahmenbauteils durch die Tragestruktur des Werkzeugs. Dabei kann die Spannkraft, mit der das Spannelement auf das zweite profilierte Kantenelement wirkt, durch die Befestigungselemente, mit denen das Spannelement auf der Kontaktfläche der zweiten Aussparung befestigt und gegen das Rahmenbauteil verschiebbar ist, eingestellt werden. Durch die Verschiebung des Spannelements gegen das Rahmenbauteil mittels der Befestigungselemente wird die durch das Spannelement auf das Rahmenbauteil wirkende Spannkraft eingestellt.

Eine besonders vorteilhafte Ausgestaltung wird dadurch erreicht, dass das Spannelement keilförmig ausgebildet ist. Dadurch erreichen die Reibeflächen zwischen der Kontaktfläche der zweiten Aussparung und dem Spannelement sowie zwischen dem Spannelement und dem zweiten profilierten Kantenelement des Rahmenbauteils maximale Ausdehnungen. Durch die großen Ausdehnungen der Reibeflächen, an denen die Kontaktfläche der zweiten Aussparung, das Spannelement und das profilierte Kantenelement miteinander in Kontakt stehen, wird die Spannwirkung des Spannelements und damit die Stabilität der Vorrichtung erheblich erhöht.

Zusätzlich sorgt eine keilförmige Ausgestaltung des Spannelements dadurch für erhöhte Stabilität, dass die Spannwirkung durch die Keilform bei Verschieben des Elements gegen das Rahmenbauteil auch senkrecht zur Verschieberichtung erhöht wird. Somit wird mittels des Spannelements eine effektive Verspannung von Rahmenbauteil und zweiter Aussparung der Tragestruktur erreicht.

Es ist darüber hinaus vorteilhaft, dass das Spannelement eine zweite Seite aufweist, welche formschlüssig an dem zweiten profilierten Kantenelement des Rahmenbauteils anliegt. Dadurch umgreift die Tragestruktur des Werkzeugs in Zusammenwirken mit dem auf der Kontaktfläche der Tragestruktur befestigten Spannelement die gegenüberliegenden profilierten Kantenelemente des Rahmenbauteils spielfrei und stabil.

Die Werkzeuge sollen entlang des Rahmenbauteils verschiebbar befestigt sein. Die Verschiebbarkeit ermöglicht beispielsweise die Einstellung von verschiedenen Säreihenabständen beispielsweise in Abhängigkeit vom auszubringenden Saatguttyp. In Zusammenwirken beispielsweise mit in ihrer Breite verstellbaren Rahmenbauteilen können die Werkzeuge durch ihre Verschiebbarkeit beispielsweise zwischen einer Arbeits- und einer Transportposition wechseln. Somit ist die Gesamtbreite der landwirtschaftlichen Arbeitsmaschine veränderbar, was ein Einhalten der maximal zulässigen Straßentransportbreite auch bei wesentlich größeren vorgesehenen Arbeitsbreiten ermöglicht. Für die Verschiebbarkeit der Werkzeuge ist es von Vorteil, dass die zweite Seite des Spannelements Aussparungen zur Aufnahme von Gleitelementen aufweist. Erfindungsgemäß steht die zweite Seite des Spannelements formschlüssig und spielfrei mit dem Rahmenbauteil in Kontakt. Zur Einstellung der Werkzeugposition muss eine Bewegung der Werkzeuge gegen die an den Reibeflächen auftretenden Haftreibungskräfte erfolgen. Bei einer durch das Spannelement aufgebrachten großen Spannkraft und einer spielfreien Befestigung zwischen Tragestruktur und Rahmenbauteil sind diese Haftreibungskräfte sehr groß. Das Einbringen von Gleitelementen, welche die Spannwirkung nicht beeinflussen, aber gleitende Bewegungen entlang des Rahmenbauteils begünstigen, ermöglicht ein energiesparendes, verschleißarmes und komfortables Verschieben der Werkzeuge.

Für die Stabilität der Verbindung von Tragestruktur und profilierten Kantenelementen des Rahmenbauteils ist es von Vorteil, die Kontaktfläche der zweiten geeigneten Aussparung und die die erste und die zweite Aussparung verbindende Seitenfläche einen Winkel von wenigstens 90° einschließen. Dadurch wird bei einer durch eine Verschiebung des Spannelementes gegen das Rahmenbauteil erreichten Spannwirkung die Spannwirkung auch senkrecht zur Verschieberichtung des Spannelements entfaltet. Auf diese Weise werden die Befestigungselemente zur Befestigung des Spannelements auf der Kontaktfläche der zweiten Aussparung entlastet, da sie nicht mehr Widerlager für die vollständige aufgebrachte Spannkraft dienen sondern ein winkelabhängiger Teil auf die Kontaktfläche der zweiten Aussparung übertragen wird. Durch die Entlastung der Befestigungselemente wird der Ermüdungsverschleiß dieser Befestigungselemente reduziert.

Damit das Spannelement mit den Befestigungselementen zuverlässig auf der Kontaktfläche der zweiten Aussparung befestigt werden kann, ist es vorteilhaft, das Spannelement eine dritte Seite und in dieser dritten Seite Aussparungen zur Aufnahme von geeigneten Befestigungselementen zur Befestigung des Spannelements auf der Kontaktfläche der zweiten geeigneten Aussparung aufweist. Dadurch können die Befestigungselemente durch das Spannelement geführt werden und es wird eine exakte und spielfreite Befestigung des Spannelements erreicht.

Eine weitere vorteilhafte Ausgestaltung ergibt sich dadurch, dass bei Auftreten von Spiel zwischen den Teilen aufgrund von Verschleiß der Gleitelemente für eine formschlüssige und spielfreie Befestigung der Tragestruktur am profilierten Rahmenbauteil die Spannkraft und/oder der Abstand zwischen Spannelement und dem profilierten Rahmenbauteil mittels der geeigneten Befestigungselemente zur Befestigung des Spannelements auf der Kontaktfläche der zweiten geeigneten Aussparung einstellbar ist. Werden die Gleitelemente beispielsweise durch Abrieb verformt, wird diese Verformung durch geeignete Verschiebung des Spannelements mittels der Befestigungselemente zur Befestigung des Spannelements auf der Kontaktfläche der zweiten Aussparung unter Aufrechterhaltung von Formschluss und Spielfreiheit ausgeglichen. Sind die Gleitelemente verschlissen, können sie komfortabel und kostengünstig ausgetauscht werden, bevor ein Verschleiß der stabilitätsrelevanten Bauteile einsetzt, der die Stabilität der Befestigung beeinträchtigen würde. Somit wird die Stabilität der Befestigung der Werkzeuge an den Rahmenbauteilen über die gesamte Lebensdauer der landwirtschaftlichen Arbeitsmaschine auf einem konstanten Niveau gehalten. Vorteil der Nutzung von Verschiebebewegungen der Werkzeuge begünstigenden Gleitelementen ist daher die Reduktion des bewegungsbedingten Verschleißes von stabilitätsrelevanten Bauteilen, beispielsweise der Tragestruktur oder der profilierten Kantenelemente.

Es ist vorteilhaft, dass die Spannkraft des befestigten Spannelements derart einstellbar ist, dass die mittels Tragestruktur formschlüssig und spielfrei am profilierten Rahmenbauteil befestigte Vorrichtung horizontal in Richtung des profilierten Rahmenbauteils verschiebbar ist. Dadurch wird erreicht, dass bei einer sicheren und zuverlässigen Befestigung der Werkzeuge an einem Rahmenbauteil der landwirtschaftlichen Arbeitsmaschine die befestigten Werkzeuge entlang des Rahmenbauteils beweglich sind. Somit können für verschiedene Einsatzzwecke geeignete Abstände zwischen den Werkzeugen gewählt werden, wie es beispielsweise bei der Aussaat verschiedener Pflanzenkulturen mittels der Säaggregate einer Einzelkornsämaschine üblich ist.

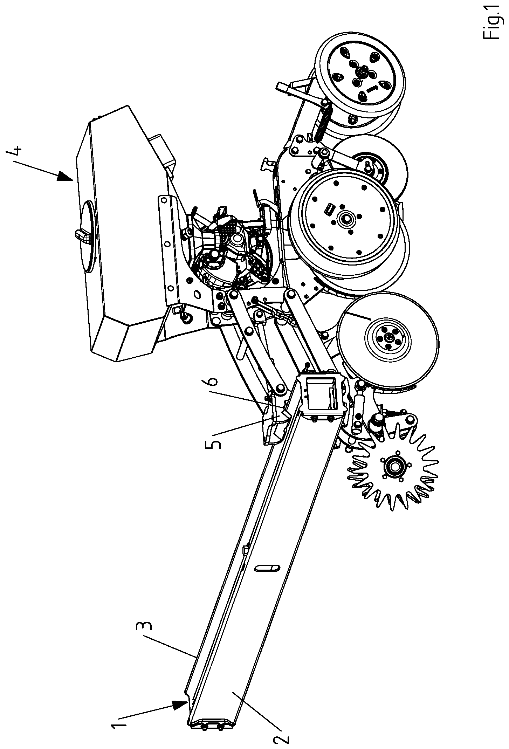

Weitere Einzelheiten der Erfindung sind der Beispielsbeschreibung und den Zeichnungen zu entnehmen. Die Zeichnungen zeigen
- Fig.1: ein mittels einer Tragestruktur und Spannelement an den profilierten Kanten eines Rahmenbauteils einer landwirtschaftlichen Arbeitsmaschine befestigtes Säaggregat einer Einzelkornsämaschine in perspektivischer Ansicht von schräg vorne oben,

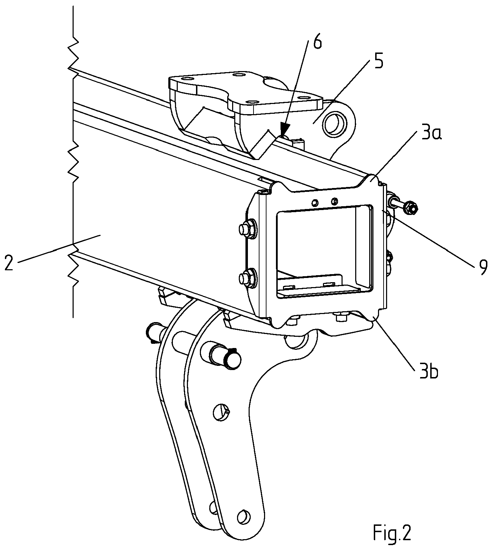

- Fig.2: die mittels Spannelement an den profilierten Kanten eines Rahmenbauteils befestigte Tragestruktur ohne Säaggregat in perspektivischer Ansicht von schräg vorne oben,

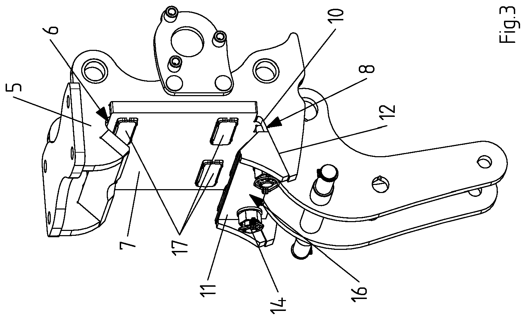

- Fig.3: die Tragestruktur mit befestigtem Spannelement in perspektivischer Ansicht von schräg vorne oben,

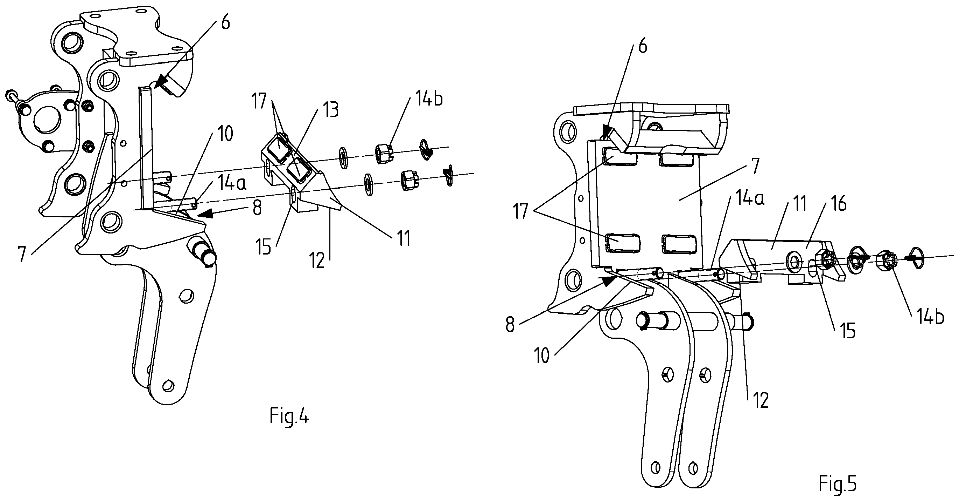

- Fig.4: die Tragestruktur in perspektivischer Ansicht von schräg hinten oben mit zu befestigendem Spannelement in Explosionsdarstellung,
- Fig.5: die Tragestruktur in perspektivischer Ansicht von schräg vorne mit zu befestigendem Spannelement in Explosionsdarstellung und

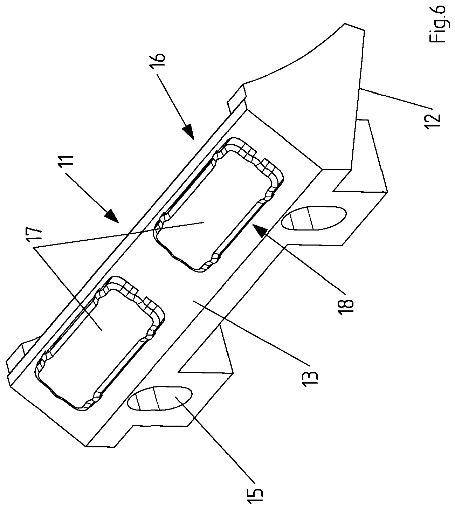

- Fig.6: das Spannelement mit Gleitelementen in perspektivischer Ansicht von schräg hinten oben.

An einer nicht dargestellten landwirtschaftlichen Arbeitsmaschine, welche im gewählten Ausführungsbeispiel als Einzelkornsämaschine ausgebildet ist, ist ein Rahmen 1 vorhaben, der Rahmenbauteile 2 aufweist, welche vorzugsweise quer zur Fahrtrichtung angeordnet sind. Zumindest einige der Rahmenbauteile 2 weisen profilierte Kantenelemente 3 auf. Der landwirtschaftlichen Arbeitsmaschine sind mehrere Werkzeuge 4 zugeordnet, welche im gewählten Beispiel als Säaggregate für die Einzelkornsaat verschiedener Pflanzenkulturen ausgebildet und an den dafür vorgesehenen Rahmenbauteilen 2 des Rahmens 1 angeordnet sind.

Die Werkzeuge 4 werden mittels einer Tragestruktur 5 an den profilierten Kantenelementen 3 der Rahmenbauteile 2 der Rahmens 1 befestigt. Dazu weist die Tragestruktur 5 eine erste Aussparung 6 auf, mit der die Tragestruktur 5 an einem ersten profilierten Kantenelement 3a des Rahmenbauteils 2 eingehängt wird. Die erste Aussparung 6 ist mittels einer verbindenden Seitenfläche 7 mit einer zweiten Aussparung 8 verbunden. Die die erste Aussparung 6 mit der zweiten Aussparung 8 verbindende Seitenfläche 7 der Tragestruktur 5 liegt formschlüssig an einer zwei gegenüberliegende profilierte Kantenelemente 3a,3b verbindenden Seitenfläche 9 des Rahmenbauteils 2 an.

Die zweite Aussparung 8 der Tragestruktur 5 weist eine Kontaktfläche 10 auf, welche mit der die erste Aussparung 6 und die zweite Aussparung 8 verbindenden Seitenfläche 7 einen Winkel von wenigstens 90° einschließt.

Auf der Kontaktfläche 10 wird ein Spannelement 11 positioniert, welches geeignet ist, den Formschluss zwischen der Tragestruktur 5 und der profilierten Kante 3b des Rahmenbauteils 2 herzustellen. Dazu weist das Spannelement 11 eine erste Seite 12 auf, mit der es formschlüssig an der Kontaktfläche 10 der zweiten Aussparung 8 der Tragestruktur 5 anliegt. Entlang der Kontaktfläche 10 ist das Spannelement 11 verschiebbar, bis es mit einer zweiten Seite 13 formschlüssig an dem zweiten profilierten Kantenelement 3b anliegt.

Zur Befestigung des Spannelements 11 auf der Kontaktfläche 10 werden geeignete Befestigungselemente 14, vorzugsweise Schraubverbindungen, genutzt. Zur Durchführung der Befestigungselemente 14a weist das Spannelement 11 Durchführungen 15 auf. Die durch das Spannelement 11 geführten Befestigungselemente 14a werden mit geeigneten Gegenstücken 14b verschraubt, welche von einer dritten Seite 16 des Spannelements 11 aus auf die Befestigungselemente 14a aufgesetzt werden, wobei die dritte Seite geeignete Aussparungen zur Aufnahme der Befestigungselemente 14 aufweist.

Die Spannkraft mit der das Spannelement 11 gegen das zweite profilierte Kantenelement 3b des Rahmenbauteils 2 drückt, wird über die Befestigungselemente 14 eingestellt. Damit auch bei fester Verspannung von Tragestruktur 5 und Rahmenbauteil 2 mittels Spannelements 11 die Werkzeuge 4 entlang des Rahmenbauteils 2 gleitend beweglich sind, sind zur Unterstützung der Gleitbewegung Gleitelemente 17 vorgesehen. Dazu weist die zweite Seite 13 des Spannelements 11 geeignete Aussparungen 18 zur Aufnahme der Gleitelemente 17 auf.

Durch seine wenigstens drei wirksamen Seiten 12, 13 und 16 ist das Spannelement 11 keilförmig ausgebildet. Auf der Kontaktfläche 10 der zweiten Aussparung 8 liegend wird es mit über die Befestigungselemente 14 einstellbarer Spannkraft mit seiner zweiten Seite 13 gegen das zweite profilierte Kantenelement 3b des Rahmenbauteils 2 gedrückt. Dadurch wird das zweite profilierte Kantenelement 3b des Rahmenbauteils formschlüssig und spielfrei umschlossen und das Werkzeug 4 mittels seiner Tragestruktur 5 sicher befestigt. Aufgrund des Winkels von wenigstens 90° zwischen der Kontaktfläche 10 und der die beiden Aussparungen 6 und 8 verbindenden Seitenfläche 7 wirkt ein winkelabhängiger Anteil der Spannkraft des Spannelements 11 gegen die Kontaktfläche 10 der zweiten Aussparung 8 der Tragestruktur 5. Dadurch wird das keilförmige Spannelement stabiler zwischen dem profilierten Kantenelement 3b des Rahmenbauteils 2 und der Tragestruktur 5 verspannt. Gleichzeitig werden die die Spannkraft aufbringenden Befestigungselemente 14 entlastet, was zu einem verringerten Ermüdungsverschleiß der Befestigungselemente 14 führt.

Mittels der Befestigungselemente 14 des Spannelements 11 auf der Kontaktfläche 10 wird die Spannkraft des Spannelements 11 derart eingestellt, dass die mittels Tragestruktur 5 formschlüssig und spielfrei am profilierten Rahmenbauteil 3b befestigten Werkzeuge 4 horizontal entlang des Rahmenbauteils 2 beweglich sind.

Durch die Verschiebebewegungen der Werkzeuge 4 entlang des Rahmenbauteils 2 tritt Reibung auf. Durch diese Reibung verschleißen die die Gleitbewegung unterstützenden Gleitelemente 17. Damit weiterhin eine formschlüssige und spielfreie Befestigung und die Verspannung der Befestigung der Tragestruktur 5 an den profilierten Kantenelementen 3a, 3b des Rahmenbauteils gewährleistet ist, werden Spannkraft und Abstand zwischen Spannelement 11 und profiliertem Kantenelement 3b bei Verformungen der Gleitelemente 17 mittels der Befestigungselemente 14 nachgeregelt.

Auf diese Weise wird der bewegungsbedingte Verschleiß auf die kostengünstig und komfortabel austauschbaren Gleitelemente 17 konzentriert und der Verschleiß an den stabilitätsrelevanten Bauteilen, beispielsweise an den profilierten Kantenelementen 3a, 3b oder an den Rahmenbauteilen, auf ein Mindestmaß reduziert.

## Patentansprüche

1. Landwirtschaftliche Arbeitsmaschine, mit
- einem profilierte Kantenelemente (3) aufweisenden Rahmenbauteil (2); und
- einer Vorrichtung zur Befestigung eines Werkzeugs (4) an dem Rahmenbauteil (2),
wobei die Vorrichtung eine Tragestruktur (5) mit für die Umgreifung der profilierten Kantenelemente (3) des Rahmenbauteils (2) geeigneten Aussparungen (6,8) und eine diese Aussparungen (6,8) verbindende Seitenfläche (7) aufweist und mit diesen die Tragestruktur (5) die profilierten Kantenelemente (3) formschlüssig umgreift, wobei die Tragestruktur (5) an einem ersten profilierten Kantenelement (3a) des Rahmenbauteils (2) mittels einer ersten geeigneten Aussparung (6) eingehängt ist, mit der die Aussparungen (6,8) verbindende Seitenfläche (7) an dem Rahmenbauteil (2) anliegt **dadurch gekennzeichnet, dass** die Vorrichtung an einem dem ersten profilierten Kantenelement (3a) gegenüberliegenden zweiten profilierten Kantenelement (3b) des Rahmenbauteils (2) zur Erreichung des Formschluss zwischen dem zweiten profilierten Kantenelement (3b) des Rahmenbauteils (2) und der zweiten geeigneten Aussparung (8) ein Spannelement (11) aufweist, welches mit einer ersten Seite (12) an einer Kontaktfläche (10) der Tragestruktur (5) anliegt und derart zwischen der Kontaktfläche (10) der Tragestruktur (5) und dem Rahmenbauteil (2) angeordnet ist, dass die Tragestruktur (5) mit dem auf der Kontaktfläche (10) der Tragestruktur (5) befestigten Spannelement (11) die gegenüberliegenden profilierten Kantenelemente (3a, 3b) umgreift,
wobei das Spannelement (11) auf der Kontaktfläche (10) der Tragestruktur (5) gegen das Rahmenbauteil (2) verschiebbar ist und die Spannkraft dieses Spannelements (11) mittels zur Befestigung des Spannelements (11) auf dieser Kontaktfläche (10) geeigneter Befestigungselemente (14) einstellbar ist.

2. Landwirtschaftliche Arbeitsmaschine nach Anspruch 1,
**dadurch gekennzeichnet, dass** das Spannelement (11) keilförmig ausgebildet ist.

3. Landwirtschaftliche Arbeitsmaschine nach zumindest einem der vorangegangenen Ansprüche,
**dadurch gekennzeichnet, dass** das Spannelement (11) eine zweite Seite (13) aufweist, welche formschlüssig an dem zweiten profilierten Kantenelement (3b) des Rahmenbauteils (2) anliegt.

4. Landwirtschaftliche Arbeitsmaschine nach zumindest einem der vorangegangenen Ansprüche,
**dadurch gekennzeichnet, dass** die zweite Seite (13) des Spannelements (11) Aussparungen (18) zur Aufnahme von Gleitelementen (17) aufweist.

5. Landwirtschaftliche Arbeitsmaschine nach zumindest einem der vorangegangenen Ansprüche,
**dadurch gekennzeichnet, dass** die Kontaktfläche (10) der Tragestruktur (5) und die die erste und die zweite Aussparung (6,8) verbindende Seitenfläche (7) einen Winkel von wenigstens 90° einschließen.

6. Landwirtschaftliche Arbeitsmaschine nach zumindest einem der vorangegangenen Ansprüche,
**dadurch gekennzeichnet, dass** das Spannelement (11) eine dritte Seite (16) und in dieser dritten Seite (16) Aussparungen (15) zur Aufnahme von geeigneten Befestigungselementen (14) zur Befestigung des Spannelements (11) auf der Kontaktfläche (10) der Tragestruktur (5) aufweist.

7. Landwirtschaftliche Arbeitsmaschine nach Anspruch 4,
**dadurch gekennzeichnet, dass** bei Verschleiß der Gleitelemente (17) für eine formschlüssige und spielfreie Befestigung der Tragestruktur (5) am profilierten Rahmenbauteil (2) die Spannkraft und/oder der Abstand zwischen Spannelement (11) und dem profilierten Rahmenbauteil (2) mittels der geeigneten Befestigungselemente (14) zur Befestigung des Spannelements (11) auf der Kontaktfläche (10) der Tragestruktur (5) einstellbar ist.

8. Landwirtschaftliche Arbeitsmaschine nach zumindest einem der vorangegangenen Ansprüche,
**dadurch gekennzeichnet, dass** die Spannkraft des befestigten Spannelements (11) derart einstellbar ist, dass die mittels Tragestruktur (5) formschlüssig und spielfrei am profilierten Rahmenbauteil (2) befestigte Vorrichtung horizontal in Richtung des profilierten Rahmenbauteils (2) verschiebbar ist.

## Claims

1. Agricultural machine, having
- a frame component (2) having profiled edge elements (3); and
- a device for fastening a tool (4) to the frame component (2),
wherein the device has a carrying structure (5) with recesses (6, 8) suitable for engaging around the profiled edge elements (3) of the frame component (2) and a side surface (7) connecting said recesses (6, 8), and, with said recesses, the carrying structure (5) engages around the profiled edge elements (3) in a form-fitting manner, wherein the carrying structure (5) is suspended on a first profiled edge element (3a) of the frame component (2) by means of a first suitable recess (6) and lies with the side surface (7) connecting the recesses (6, 8) against the frame component (2), **characterized in that**, in order to achieve the form-fitting connection between the second profiled edge element (3b) of the frame component (2) and the second suitable recess (8), the device has, on a second profiled edge element (3b) of the frame component (2) that is opposite the first profiled edge element (3a), a clamping element (11) which lies with a first side (12) against a contact surface (10) of the carrying structure (5) and is arranged between the contact surface (10) of the carrying structure (5) and the frame component (2) in such a manner that the carrying structure (5) engages around the opposite profiled edge elements (3a, 3b) by means of the clamping element (11) that is fastened on the contact surface (10) of the carrying structure (5), wherein the clamping element (11) can be displaced on the contact surface (10) of the carrying structure (5) against the frame component (2) and the clamping force of said clamping element (11) can be adjusted by means of suitable fastening elements (14) for fastening the clamping element (11) on said contact surface (10).

2. Agricultural machine according to Claim 1, **characterized in that** the clamping element (11) is wedge-shaped.

3. Agricultural machine according to at least one of the preceding claims, **characterized in that** the clamping element (11) has a second side (13) which lies in a form-fitting manner against the second profiled edge element (3b) of the frame component (2) .

4. Agricultural machine according to at least one of the preceding claims, **characterized in that** the second side (13) of the clamping element (11) has recesses (18) for receiving sliding elements (17).

5. Agricultural machine according to at least one of the preceding claims, **characterized in that** the contact surface (10) of the carrying structure (5) and the side surface (7) connecting the first and the second recess
(6, 8) enclose an angle of at least 90°.

6. Agricultural machine according to at least one of the preceding claims, **characterized in that** the clamping element (11) has a third side (16) and, in said third side (16), has recesses (15) for receiving suitable fastening elements (14) for fastening the clamping element (11) on the contact surface (10) of the carrying structure (5).

7. Agricultural machine according to Claim 4, **characterized in that**, in the event of wear of the sliding elements (17), for a form-fitting and play-free fastening of the carrying structure (5) to the profiled frame component (2) the clamping force and/or the distance between clamping element (11) and the profiled frame component (2) can be adjusted by means of the suitable fastening elements (14) for fastening the clamping element (11) on the contact surface (10) of the carrying structure (5).

8. Agricultural machine according to at least one of the preceding claims, **characterized in that** the clamping force of the fastened clamping element (11) can be set in such a manner that the device fastened to the profiled frame component (2) in a form-fitting and play-free manner by means of the carrying structure (5) can be displaced horizontally in the direction of the profiled frame component (2).

## Revendications

1. Engin de travail agricole, comprenant :
- un composant de cadre (2) présentant des éléments de bord profilés (3) ; et
- un dispositif pour la fixation d'un outil (4) au composant de cadre (2),
le dispositif présentant une structure porteuse (5) avec des évidements (6, 8) appropriés pour venir en prise autour des éléments de bord profilés (3) du composant de cadre (2) et une surface latérale (7) reliant ces évidements (6, 8), et la structure porteuse (5) venant en prise par engagement par correspondance de formes avec ceux-ci autour des éléments de bord profilés (3), la structure porteuse (5) étant accrochée à un premier élément de bord profilé (3a) du composant de cadre (2) au moyen d'un premier évidement approprié (6) avec lequel la surface latérale (7) reliant les évidements (6, 8) s'applique contre le composant de cadre (2), **caractérisé en ce que** le dispositif présente, au niveau d'un deuxième élément de bord profilé (3b) du composant de cadre (2) opposé au premier élément de bord profilé (3a), pour réaliser l'engagement par correspondance de formes entre le deuxième élément de bord profilé (3b) du composant de cadre (2) et le deuxième évidement approprié (8), un élément de serrage (11) qui s'applique avec un premier côté (12) contre une surface de contact (10) de la structure porteuse (5) et qui est disposé entre la surface de contact (10) de la structure porteuse (5) et le composant de cadre (2) de telle sorte que la structure porteuse (5) vienne en prise avec l'élément de serrage (11) fixé sur la surface de contact (10) de la structure porteuse (5) autour des éléments de bord profilés opposés (3a, 3b), l'élément de serrage (11) pouvant être déplacé sur la surface de contact (10) de la structure porteuse (5) vers le composant de cadre (2) et la force de serrage de cet élément de serrage (11) pouvant être ajustée au moyen d'éléments de fixation appropriés (14) pour la fixation de l'élément de serrage (11) sur cette surface de contact (10).

2. Engin de travail agricole selon la revendication 1,
**caractérisé en ce que** l'élément de serrage (11) est réalisé en forme de cale.

3. Engin de travail agricole selon au moins l'une des revendications précédentes,
**caractérisé en ce que** l'élément de serrage (11) présente un deuxième côté (13) qui s'applique par engagement par correspondance de formes contre le deuxième élément de bord profilé (3b) du composant de cadre (2).

4. Engin de travail agricole selon au moins l'une des revendications précédentes,
**caractérisé en ce que** le deuxième côté (13) de l'élément de serrage (11) présente des évidements (18) pour recevoir des éléments de glissement (17) .

5. Engin de travail agricole selon au moins l'une des revendications précédentes,
**caractérisé en ce que** la surface de contact (10) de la structure porteuse (5) et la surface latérale (7) reliant le premier et le deuxième évidement (6, 8) forment un angle d'au moins 90°.

6. Engin de travail agricole selon au moins l'une des revendications précédentes,
**caractérisé en ce que** l'élément de serrage (11) présente un troisième côté (16) et, dans ce troisième côté (16), des évidements (15) pour recevoir des éléments de fixation appropriés (14) pour la fixation de l'élément de serrage (11) sur la surface de contact (10) de la structure porteuse (5).

7. Engin de travail agricole selon la revendication 4,
**caractérisé en ce qu'**en cas d'usure des éléments de glissement (17), pour une fixation par engagement par correspondance de formes et sans jeu de la structure porteuse (5) sur le composant de cadre profilé (2), la force de serrage et/ou la distance entre l'élément de serrage (11) et le composant de cadre profilé (2) peuvent être ajustées au moyen des éléments de fixation appropriés (14) pour la fixation de l'élément de serrage (11) sur la surface de contact (10) de la structure porteuse (5).

8. Engin de travail agricole selon au moins l'une des revendications précédentes,
**caractérisé en ce que** la force de serrage de l'élément de serrage fixé (11) peut être ajustée de telle sorte que le dispositif fixé au moyen de la structure porteuse (5) par engagement par correspondance de formes et sans jeu sur le composant de cadre profilé (2) puisse être déplacé horizontalement dans la direction du composant de cadre profilé (2).
